# EUROPÄISCHE PATENTSCHRIFT

(11) **EP 2 154 227 B1**
(45) Veröffentlichungstag und Bekanntmachung des Hinweises auf die Patenterteilung: **11.09.2013**
(21) Anmeldenummer: 09008723.0
(22) Anmeldetag: 03.07.2009
(51) Int. Cl.: C10L 5/04, C10L 5/10, C10L 5/08, C10L 5/28

(54) **Verfahren zur Herstellung von Brennstoffpresslingen unter Verwendung von Braunkohlenxylit**
Method for manufacturing of fuel pellets of lignite xylite
Procédé de fabrication de pièces moulées de combustible utilisant du xylite de lignite

(30) Priorität: 24.07.2008 DE 102008034796
(43) Veröffentlichungstag der Anmeldung: 17.02.2010
(73) Patentinhaber: RWE Power Aktiengesellschaft, 45128 Essen (DE)
(72) Erfinder: Härtel, Georg, 09599 Freiberg (DE); Lange, Raimund, 50226 Frechen (DE); Leßenich, Hans Albert, 50129 Bergheim (DE); Menge, Franz-Josef, 50259 Pulheim (DE); Schröder, Hans-Werner, 09599 Freiberg (DE); Unland, Georg, 09599 Freiberg (DE); Wollenberg, Ralf, 09599 Freiberg (DE)
(74) Vertreter: polypatent

(56) Entgegenhaltungen:
- EP-A- 1 842 896
- DE-A1- 10 150 135
- DE-A1- 19 537 238
- DE-C1- 10 150 074
- OLEG REZNICHENKO: 'Herstellung von Brennstoffpresslingen aus Kohlen mit unterschiedlichen Inkohlungsgrad für Kleinfeuerungsanlagen' DISSERTATION, [Online] 12 Dezember 2003, FREIBERG, Seiten 1 - 174, XP055013325 Gefunden im Internet: <URL:http://www.qucosa.de/fileadmin/data/qu cosa/documents/2060/dissreznichenko.pdf> [gefunden am 2011-11-28]

## Beschreibung

Die Erfindung betrifft ein Verfahren zur Herstellung von Brennstoffpellets unter Verwendung von Braunkohlenxylit, umfassend folgende Verfahrensschritte:
- Abtrennung von Braunkohlenxylit von der teilweise mit diesem verwachsenen detritischen Braunkohle durch Zerkleinerung und/oder Klassierung,
- Zerkleinerung und/oder Zerfaserung des Braunkohlenxylits und
- Herstellung von Pellets aus dem zerkleinerten Braunkohlenxylit.

Ein Verfahren der Eingangs genannten Art ist beispielsweise aus der EP 1 842 896 A2 bekannt. Bei dem in der EP 1 842 896 A2 bekannten Verfahren handelt es sich um ein Verfahren zur sogenannten Trockenpelletierung von Xylit, die vergleichbar mit der Holzpelletierung ist.

Für die Herstellung eines Brennstoffs auf Xylitbasis sind grundsätzlich zwei unterschiedliche Verfahren bekannt, einerseits die Brikettierung von Xylit, andererseits die Pelletierung analog der Herstellung von Holzpellets, wie sie beispielsweise in der EP 1 842 896 A2 beschrieben ist. Mit der Brikettierung von Xylit erhält man einen großstückigen Brennstoff, der vorzugsweise in Einzelfeuerstätten mit manueller Bestückung einsetzbar ist, beispielsweise in Öfen und Kaminen. Mittels Pelletierung kann hingegen ein Brennstoff hergestellt werden, der mit ähnlichem Komfort wie Öl und Gas in Automatikfeuerungsanlagen eingesetzt werden kann.

Die Pelletierung von Xylit nach dem in der EP 1 842 896 A2 beschriebenen Verfahren hat sich als verhältnismäßig aufwendig erwiesen. Darüber hinaus erfüllen die so erhaltenen Xylitpellets nicht immer die Festigkeitskriterien, die an einen solchen Brennstoff zu stellen sind. Das getrocknete Xylit ist hart und spröde, weil die gelösten Huminsäuren bereits ausgehärtet sind und die kolloidal dispergierten Bestandteile der Xylitsubstanz sowie die detritische Restkohlesubstanz bereits zu einem neuen, harten Feststoff aggregiert sind. Bei der Herstellung der Pellets kann der verhärtete Xylit oftmals nicht hinreichend verdichtet werden, was eine Voraussetzung für die Erzielung stabiler Bindekräfte im Pelletverbund ist.

Aus der DE 101 50 074 C1 ist ein Verfahren zur Herstellung eines kleinstückigen Brennstoffs unter Verwendung von Xylit bekannt, der die gewünschten Dosier- und Verbrennungseigenschaften für einen solchen Brennstoff erfüllt.

Nach dem in der DE 101 50 074 beschriebenen Verfahren wird das Xylit zu einem Faserstoff mit Faserlängen ≤ 15 mm aufgeschlossen. Anschließend wird das Xylit mit einem über dem Sättigungswassergehalt liegenden Wassergehalt von etwa 50 - 65 % zu Pellets geformt. Zur Erzielung der erforderlichen Bindekräfte erfolgt nach diesem Verfahren eine intensive und anhaltende mechanische Beanspruchung des Xylits bei Zugabe von Wasser oder Wasserdampf bis zur Überschreitung des Sättigungswassergehaltes, bis ein Teil des Xylits in eine klebrig-pastöse Masse überführt ist. Diese klebrig-pastöse Masse wird als Bindemittel benötigt, welches die Erhärtung der Pellets während der Trocknung bewirkt.

Dieses Verfahren ist energetisch verhältnismäßig aufwendig, weil viel Überschusswasser aus den Rohpellets ausgetrieben werden muss. Das Überschusswasser verhindert die Verdichtung des Xylits zu Rohpellets mit ausreichend hohem Dichtegrad. Durch die Schrumpfung der Pellets während der Trocknung kann der Dichtegradverlust nicht ausreichend kompensiert werden, zumal die große Menge aus ausströmenden Wasserdampf die Schrumpfung stark behindert. Die Pellets erhalten deshalb eine vergleichsweise nur geringe Rohdichte. Dies hat negative Auswirkungen auf die Energiedichte der Pelletschüttung und auf die Transport- und Lagerfähigkeit. Die geringe Rohdichte wirkt sich außerdem nachteilig auf die mechanische Stabilität der Xylitpellets aus.

Aus der DE 196 08 386 A1 ist ein Verfahren zur Herstellung von Braunkohlenpresslingen bekannt, wobei der Braunkohlengrundmasse Xylitfasern homogen und gleichmäßig untergemischt werden, und zwar unter Zugabe von Wasser oder wässrigen Lösungen bzw. Dispersionen. Durch die Zugabe von Flüssigkeit wird eine Stabilisierung des Mischguts durch Haftverbunde und eine Mobilisierung des Bindevermögens von Braunkohle und Xylitfaser erzielt. Die so erhaltene Mischung wird anschließend mit geringem Pressdruck zu Presslingen umgeformt, die schließlich einer Trocknung unterzogen werden.

Bei dem gemäß DE 196 08 386 A1 erhaltenen Brennstoffpressling bildet die detritische Braunkohle die Pelletmatrix, die verwendeten Xylitfasern wirken armierend.

Ein solcher Brennstoff ist allerdings für den Betrieb von Automatikfeuerungsanlagen ungeeignet, da dieser einen hohen Aschegehalt aufweist, der aus dem Mineralstoffgehalt der Braunkohle resultiert. Hieraus resultiert eine langsame Verbrennung, die zur Überschüttung der Roste bzw. zur Verstopfung der Brennerschale in Automatikfeuerungsanlagen führen kann. Dies hat negative Konsequenzen für den thermischen Wirkungsgrad der Feuerung und die Schadstoffemissionen.

Ein weiteres Verfahren zur Herstellung von Brennstoffpresslingen ist aus der DE 101 50 135 A1 bekannt. Dort wird Braunkohlexylit aus Braunkohle abgetrennt, zerkleinert und zerfasert, wobei daraufhin das Braunkohlexylit mit Ligno-Zellulosen vermischt und bei Temperaturen von ≤ 90° getrocknet wird. Die Mischung mit einem Wassergehalt von ≤ 22 % wird daraufhin zu Brennstoffpresslingen verarbeitet und durch weitere Trocknung auf einen Wassergehalt von 8 % bis 12 % gebracht. Nachteilig bei der Abtrennung von Braunkohlenxylit aus grubenfeuchter Braunkohle ist eine nicht optimale Xylitaushaltung bei der anschließenden Absiebung. Bei einem Wassergehalt von ≤ 22 % kann das getrocknete Gut, wie in der DE 101 50 135 A1 beschrieben, zwar ohne Erwärmung verpresst werden, vorteilhaft ist aber eine Erwärmung des Gutes für die Verpressung auf eine Temperatur von 50°C bis 90°C. Es ist daher eine Aktivierung von Bindekräften mittels thermischer Behandlung erforderlich. Auch findet eine aufgrund des geringen Wassergehalts auftretende übermäßige Erhitzung des Xylits aufgrund verstärkter Scher- und Reibungskräfte statt.

Aus der DE 1 150 334 A ist ein Verfahren zum Abscheiden von Xylit aus Braunkohle bekannt, bei welchem eine Vortrocknun von Braunkohle und Braunhohlenxylit vor der Zerkleinerung und Abtrennung des Braunkohlenxylits stattfindet. Danach werden Braunkohle und Xylit mittels einer Schwimm-Sink-Scheidung voneinander getrennt.

Das Dokument Oleksiy Reznichenko: "Herstellung von Brennstoffagglomeraten aus Kohlen mit unterschiedlichem Inkohlungsgrad für Kleinfeuerungsanlagen" XP55013325, Freiburg, beschreibt Brennstoffpellets auf der Basis eines Xylitsiebdurchgangs für Automatikfeuerungsanlagen sowie ein Verfahren zur deren Herstellung.

Der Erfindung liegt die Aufgabe zugrunde, ein Verfahren zur Herstellung von Brennstoffpellets für Automatikfeuerungsanlagen bereit zustellen, welche ohne hohen Aufwand für die Trocknung und mit möglichst geringem Energieverbrauch bei der Pelletierung durchführbar sind.

Die Aufgabe wird gelöst mit den Merkmalen des unabhängigen Anspruch 1 sowie der abhangigen Ansprüche 2-11.

Ein Feuchtigkeitsgehalt in der zuvor beschriebenen Größenordnung hat sich als für den Pelletierprozess optimal herausgestellt. Eine Aktivierung von Bindekräften mittels thermischer Behandlung ist bei dem genannten Feuchtigkeitsgrad nicht erforderlich. Insbesondere vorteilhaft ist es, dass beispielsweise bei der Verwendung von Matrizenpressen kein übermäßiges Erhitzen des Xylits infolge verstärkter Scher- und Reibungskräfte stattfindet. Hierdurch wird auch die Standzeit der verwendeten Matrizen erhöht.

Bevorzugt finden Matrizenpressen Anwendung, die mit einem Hydraulikdruck für das Anpressen der Presswalzen von > 50 bar arbeiten.

Das vorliegende Verfahren geht diesbezüglich im Vergleich zum Stand der Technik von einem vollständig neuen Ansatz aus. Beispielsweise in der DE 196 08 386 wird Xylit als Armierungssubstanz zur Stabilisierung eines Braunkohlenpresslings verwendet. Erfindungsgemäß wird die detritische Braunkohlensubstanz als Bindemittel des Xylitpresslings verwendet. Der Pressling besitzt eine Xylitmatrix, in die die detritische Substanz eingearbeitet wird. Es hat sich herausgestellt, dass die detritische Substanz in der Xylitmatrix die Druckplastizität des Xylits bei der Pelletierung signifikant erhöht und bei der Trocknung der Pellets Bindekräfte vermittelt. Dies liegt wahrscheinlich daran, dass die detritische Substanz partiell lösliche Huminsäuren enthält, durch die die Xylitfasern während der Trocknung verleimt werden. Dabei kommt es besonders auf die Einstellung des optimalen Anteils der detritischen Substanz an. Dieser liegt bei etwa 10 - 12 Gew.-%. Bei einer geringeren Menge an Braunkohlensubstanz lässt der Bindeeffekt stark nach, bei einer Erhöhung des Anteils der Braunkohlensubstanz wird die Dichte der erhaltenen Pellets zu groß. Darüber hinaus nimmt mit zunehmenden Gehalt an detritischer Kohlesubstanz der Aschegehalt der Pellets zu, was, wie vorstehend beschrieben, nicht wünschenswert ist.

Die detritische Substanz kann teilweise durch den Einsatz von organischen Bindemitteln ersetzt werden.

Beispielsweise kann eine Mischung aus Braunkohlenxylit mit einem Anteil von wenigstens ≥ 50 Gew.-% und lignozellulosehaltigen Rohstoffen mit einem Anteil von ≤ 50 Gew.-% verpresst werden.

Die pressfertige Mischung wird auf eine Faserlänge von ≤ 1 mm zerkleinert/zerfasert.

Als lignozellulosehaltige Rohstoffe können beispielsweise Stroh und/oder Holz Anwendung finden.

Bevorzugt wird die detritische Braunkohle bis auf einen Rest von 8 - 45 Gew.-%, vorzugsweise bis auf einen Rest von 8 - 12 Gew.-% ausgehalten, d. h. bei dem ersten Verfahrensschritt der Zerkleinerung und Absiebung bzw. Klassierung des Xylits aus der Braunkohle wird der Trennschnitt so gewählt, dass der gewünschte Rest an detritischer Braunkohle in dem zu verpressenden Material enthalten bleibt. Bei einer Siebklassierung wäre die Siebung dann so vorzunehmen, dass etwa 10 - 12 Gew.-% an Braunkohlengrundmasse mit im Siebdurchgang sind.

Auf diese Art und Weise wird ein Brennstoffpressling auf Basis von Braunkohlenxylit mit geringen Anteilen an Braunkohlengrundmasse und nennenswerten Anteilen von Lignozelluloserohstoffen erhalten. Der fertige Pressling kann einen Restfeuchtigkeitsgehalt zwischen 6 und 10 Gew.-% aufweisen.

Alternativ ist es möglich, dem Braunkohlenxylit nach dessen Zerkleinerung detritische Braunkohle beizumischen.

Vorteilhaft ist es, wenn Xylit und Braunkohle getrennt zerkleinert werden, da beide Materialien aufgrund ihrer Beschaffenheit ein grundsätzlich verschiedenes Zerkleinerungsverhalten aufweisen. Während die Zerkleinerung des elastischen, faserigen Xylits im wesentlichen über das Einbringen von Scherkräften erfolgt, wird die Braunkohlengrundmasse mittels Schlag- und Prallbeanspruchung zerkleinert. Mit Verringerung des Wassergehalts geht eine Versprödung des Ausgangsmaterials einher. Im Fall einer Zerkleinerung mittels Schlag- und Prallbeanspruchung weist die Braunkohlengrundmasse im Vergleich zum elastischen, faserigen Xylit eine geringere Festigkeit auf. Infolge dessen verbessert sich die Xylitaushaltung bei der sich anschließenden Absiebung.

Bei einer Variante des Verfahrens gemäß der Erfindung ist vorgesehen, dass die Einstellung der Feuchtigkeit der zu verpressenden Mischung durch Lufttrocknung erfolgt. Eine solche Lufttrocknung ist energetisch besonders günstig.

Bevorzugt erfolgt die Zerkleinerung des Braunkohlenxylits auf eine Faserlänge von ≤ 1 mm und auf eine Faserdicke von ≤ 0,5 mm.

Die Auffaserung kann beispielsweise mit einem Doppelschneckenzerfaserer erfolgen. Im Rahmen von Versuchen hat sich herausgestellt, dass die Pelletierfähigkeit des Xylits von der Faserfeinheit besonders positiv hinsichtlich der Stabilität des Pressprozesses und der Durchsatzleistung der Presse beeinflusst wird. Die feinen Fasern begünstigen dem Formschluss, und sie lassen sich durchgehend mit gelöster Huminsäure durchtränken. Beide Effekte tragen wesentlich zur Sicherung der Pelletqualität bei.

Bei der Herstellung von Brennstoffpresslingen auf Basis von Braunkohlenxylit mit Anteilen von Lignozelluloserohstoffen ist es vorteilhaft, sowohl die Lignozellulose-rohstoffze als auch das auch das Braunkohlenxylit gleichzeitig in einem Doppelschneckenzerfaserer zu zerkleinern/zu zerfasern. Einerseits entspricht diese Art der Zerfaserung des Materials den physikalischen Eigenschaften von Braunkohlenxylit und von lignozellulosehaltigen Reststoffen, wie beispielsweise Stroh, Holz oder dergleichen. Andererseits bewirkt eine gleichzeitige Zerkleinerung in einem Doppelschneckenzerfaserer auch eine intensive Durchmischung der Lignozelluloserohstoffe und des Braunkohlenxylits.

Nach der Verpressung werden die Presslinge vorzugsweise auf eine Restfeuchte von 6 - 10 % getrocknet. Dabei kommen zur Trocknung alle kornschonenden Trocknungsverfahren in Betracht.

Dabei erfolgt die Trocknung der Presslinge bei Temperaturen von ≤ 150 °C. Eine Trocknungsdauer von 10 bis 20 Minuten ist zweckmäßig.

Zur Trocknung der Pellets können z. B. Bandtrockner Anwendung finden.

Bei einer Variante des Verfahrens ist vorgesehen, dass der zu verpressenden Substanz ein Bindemittel, vorzugsweise auf der Basis von Stärke und/oder Zellulose zugegeben wird. Das Bindemittel kann die detritische Braunkohlensubstanz ganz oder teilweise ersetzen oder zusätzlich zur Braunkohle eingesetzt werden.

Bindemittel und Zuschlagstoffe können bereits bei der Auffaserung bzw. Zerkleinerung des Xylits, beispielsweise im Doppelschneckenzerfaserer zugegeben werden. Mit der Auffaserung geht eine intensive Durchmischung einher, wodurch die zugegebenen Stoffe optimal in der Xylitmatrix wirksam werden.

Beispielsweise im Fall des Einsatzes von raffinierter Stärke oder Zellulose als Bindemittel genügen 1 - 2 Gew.-%, um eine signifikante Qualitätssteigerung zu erzielen.

An dieser Stelle sei nochmals betont, dass die Zugabe von Bindemitteln nicht unbedingt erforderlich ist.

Der Feuchtigkeitsgehalt des gebrauchsfertigen Brennstoffpresslings kann zwischen 6 und 10 Gew.-% betragen.

Der Brennstoffpressling kann bis zum 50 % an lignozellulosehaltigen Rohstoffen wie beispielsweise Stroh und/oder Holz bzw. Holzhackschnitze aufweisen.

Bei dem Verfahren gemäß der Erfindung kann beispielsweise vorgesehen sein, zunächst eine Vorzerkleinerung des grubenfeuchten Materials vorzunehmen. Dabei kann eine mehrstufige Zerkleinerung und Absiebung des Xylits aus der Braunkohle erfolgen. Anschließend können Xylit und Braunkohle getrennt durch Lagerung an der Luft beispielsweise auf einen Feuchtigkeitsgehalt von etwa 35 Gew.-% getrocknet werden. Das so getrennte Material kann dann weiter zerkleinert werden, wobei der Xylit in einem Doppelschneckenzerfaserer auf eine Faserlänge ≤ 1 mm aufgefasert wird. Parallel hierzu erfolgt die Zerkleinerung der Braunkohlengrundmasse mittels Schlag- und Prallbeanspruchung beispielsweise in einer Hammermühle. Anschließend wird dem aufgefaserten pressfeuchten Xylit die zerkleinerte Braunkohle zugegeben. Das Material wird intensiv durchmischt und bei einem Hydraulikdruck für das Andrücken der Presswalzen von > 50 bar zu Rohpellets pelletiert.

Die Rohpellets werden bei einer Trocknungstemperatur von ≤ 150 °C etwa 10 bis 20 Minuten auf einem Bandtrockner getrocknet.

Gemäß der Erfindung kann Braunkohlenxylit mit einem Anteil ≤ 50 Gew.-% durch lignozellulose Rohstoffe ersetzt werden. Dieses Verfahren sieht die Herstellung von Brennstoffpresslingen unter Verwendung von lignozellulosehaltigem Roh-/Reststoff und detritischer Braunkohle vor, wobei die detritische Braunkohle zerkleinert und klassiert wird, der Lignozelluloserohstoff zerkleinert und/oder zerfasert wird und aus dem zerkleinerten Lignozelluloserohstoff und der Braunkohle Presslinge hergestellt werden, wobei der Feuchtigkeitsgehalt der pressfertigen Substanz vor der Verpressung auf einen Wassergehalt von 35 - 45 Gew.-% eingestellt wird.

Die Mischung kann beispielsweise aus Lignozelluloserohstoff mit einem Anteil von 8 und 45 Gew.-% detritischer Braunkohle, vorzugsweise mit einem Anteil von 10 bis 12 Gew.-% detritischer Braunkohle verpresst werden.

Vorzugsweise erfolgt die Einstellung der Feuchtigkeit der zu verpressenden Mischung durch Luftrocknung.

Die Zerkleinerung und/oder Zerfaserung des Lignozelluloserohstoffs kann auf eine Faserlänge von ≤ 1 mm erfolgen. Die Presslinge werden auf eine Rest feuchtigkeit von 6 bis 10 Gew.-% getrocknet, wobei vorzugsweise die Trockung der Presslinge bei Temperaturen vorn ≤ 150°C durchgeführt wird. Der zu verpressenden Substanz kann zusätzlich ein Bindemittel, vorzugsweise auf der Basis von Stärke und/oder Zellulose zugegeben werden.

## Patentansprüche

1. Verfahren zur Herstellung von Brennstoffpellets für
Automatikfeuerungsanlagen unter Verwendung von Braunkohlenxylit, umfassend folgende Verfahrensschritte,
- Abtrennung von Braunkohlenxylit von der teilweise mit diesem verwachsenen detritischen Braunkohle durch Zerkleinerung und Klassierung,
- Zerkleinerung und/oder Zerfaserung des Braunkohlenxylit auf eine Faserlänge von ≤ 1 mm und
- Herstellung von Pellets aus dem zerkleinertem Braunkohlenxylit mit Matrizenpressen,
wobei vor der Abtrennung von Braunkohlenxylit die Vortrocknung des grubenfeuchten Braunkohlenxylits und der Braunkohle erfolgen und bei der Herstellung von Pellets der Feuchtigkeitsgehalt der pressfertigen Substanz vor der Verpressung auf einen Wassergehalt von von 35 - 45 Gew.% eingestellt wird.

2. Verfahren nach Anspruch 1, **dadurch gekennzeichnet, dass** eine Mischung aus Braunkohlenxylit mit einem Anteil zwischen 8 und 45 Gew.-% detritischer Braunkohle, vorzugsweise mit einem Anteil von 10 - 12 Gew.-% detritischer Braunkohle verpresst wird.

3. Verfahren nach einem der Ansprüche 1 oder 2, **dadurch gekennzeichnet, dass** eine Mischung aus Braunkohlenxylit mit einem Anteil von
≥ 50 Gew.-% und lignozellulosehaltigen Rohstoffen mit einem Anteil von
≤ 50 Gew.-% verpresst wird.

4. Verfahren nach Anspruch 3, **dadurch gekennzeichnet, dass** die pressfertige Mischung auf eine Faserlänge ≤ 1 mm zerkleinert wird.

5. Verfahren nach einem der Ansprüche 3 bis 4, **dadurch gekennzeichnet**, das als lignozellulosehaltige Rohstoffe Stroh und/oder Holz Anwendung findet.

6. Verfahren nach einem der Ansprüche 1 oder 2, **dadurch gekennzeichnet, dass** die detritische Braunkohle bis auf einen Rest von 8 - 45 Gew.-%, vorzugsweise bis auf einen Rest von 8 - 12 Gew.-% ausgehalten wird.

7. Verfahren nach einem der Ansprüche 1 oder 2, **dadurch gekennzeichnet, dass** dem Braunkohlenxylit nach dessen Zerkleinerung detritische Braunkohle beigemischt wird.

8. Verfahren nach einem der Ansprüche 1 bis 7, **dadurch gekennzeichnet, dass** die Einstellung der Feuchtigkeit der zu verpressenden Mischung durch Lufttrocknung erfolgt.

9. Verfahren nach einem der Ansprüche 1 bis 8, **dadurch gekennzeichnet, dass** die Pellets auf eine Restfeuchte von 6 - 10 Gew.-% getrocknet werden.

10. Verfahren nach Anspruch 9, **dadurch gekennzeichnet, dass** die Trocknung der Pellets bei Temperaturen ≤ 150 °C durchgeführt wird.

11. Verfahren nach einem der Ansprüche 1 bis 10, **dadurch gekennzeichnet, dass** der zu verpressenden Substanz ein Bindemittel, vorzugsweise auf der Basis von Stärke und/oder Zellulose, zugegeben wird.

## Claims

1. Process for the production of fuel pellets for automatic furnaces using lignite xylitol, comprising the following process steps,
- separating lignite xylitol off from the detrital lignite which is partially intergrown with this by comminuting and classifying,
- comminuting and/or pulping the lignite xylitol to a fibre length of ≤ 1 mm and
- producing pellets from the comminuted lignite xylitol using die presses,
wherein before the separating off of lignite xylitol predrying of the pit-moist lignite xylitol and of the lignite is carried out and during the production of pellets the moisture content of the ready-to-press substance before the pressing is adjusted to a water content of 35 - 45 wt.%.

2. Process according to claim 1, **characterized in that** a mixture of lignite xylitol having a content of between 8 and 45 wt.% of detrital lignite, preferably having a content of 10 - 12 wt.% of detrital lignite, is pressed.

3. Process according to one of claims 1 or 2, **characterized in that** a mixture of lignite xylitol having a content of ≥ 50 wt.% and lignocellulose-containing raw materials having a content of ≤ 50 wt.% is pressed.

4. Process according to claim 3, **characterized in that** the ready-to-press mixture is comminuted to a fibre length of ≤ 1 mm.

5. Process according to one of claims 3 to 4, **characterized in that** straw and/or wood is used as the lignocellulose-containing raw materials.

6. Process according to one of claims 1 or 2, **characterized in that** the detrital lignite is picked out down to a residue of 8 - 45 wt.%, preferably down to a residue of 8 - 12 wt.%.

7. Process according to one of claims 1 or 2, **characterized in that** detrital lignite is admixed to the lignite xylitol after comminution thereof.

8. Process according to one of claims 1 to 7, **characterized in that** the adjustment of the moisture content of the mixture to be pressed is carried out by drying in air.

9. Process according to one of claims 1 to 8, **characterized in that** the pellets are dried to a residual moisture content of 6 - 10 wt.%.

10. Process according to claim 9, **characterized in that** the drying of the pellets is carried out at temperatures of ≤ 150 °C.

11. Process according to one of claims 1 to 10, **characterized in that** a binder, preferably based on starch and/or cellulose, is added to the substance to be pressed.

## Revendications

1. Procédé de fabrication de pellets de combustible pour des installations de chauffe automatiques moyennant l'utilisation de lignite de type « Xylit », comprenant les étapes de procédé suivantes :
- séparation du lignite « Xylit » d'avec le lignite détritique partiellement incorporé à celui-ci par fragmentation et triage,
- fragmentation et/ou déchiquetage du lignite « Xylit » à une longueur de fibres de ≤ 1 mm et
- fabrication des pellets en le lignite « Xylit » fragmenté par pressage en matrice,
sachant qu'avant la séparation du lignite « Xylit » s'effectue le pré-séchage du lignite « Xylit » humide de fosse et du lignite et que, lors de la fabrication des pellets, la teneur en humidité de la substance prête à être pressée est réglée avant le pressage à une teneur en eau de 35 à 45 % en poids.

2. Procédé selon la revendication 1, **caractérisé en ce qu'**un mélange de lignite « Xylit » avec une proportion comprise entre 8 et 45 % en poids de lignite détritique, de préférence avec une proportion comprise entre 10 et 12 % en poids de lignite détritique, est pressé.

3. Procédé selon l'une quelconque des revendications 1 ou 2, **caractérisé en ce qu'**un mélange de lignite « Xylit » en une proportion de ≥ 50 % en poids et de matières premières contenant de la lignocellulose en une proportion de ≤ 50 % en poids est pressé.

4. Procédé selon la revendication 3, **caractérisé en ce que** le mélange prêt à être pressé est fragmenté jusqu'à une longueur de fibres de ≤ 1 mm.

5. Procédé selon l'une quelconque des revendications 3 à 4, **caractérisé en ce qu'**en tant que matières premières contenant de la lignocellulose sont utilisés de la paille et/ou du bois.

6. Procédé selon l'une quelconque des revendications 1 ou 2, **caractérisé en ce que** le lignite détritique est maintenu à l'écart jusqu'à un reste de 8 à 45 % en poids, de préférence jusqu'à un reste de 8 à 12 % en poids.

7. Procédé selon l'une quelconque des revendications 1 ou 2, **caractérisé en ce que** du lignite détritique est mélangé au lignite « Xylit » après la fragmentation de ce dernier.

8. Procédé selon l'une quelconque des revendications 1 à 7, **caractérisé en ce que** l'ajustement de l'humidité du mélange à presser s'effectue par séchage à l'air.

9. Procédé selon l'une quelconque des revendications 1 à 8, **caractérisé en ce que** les pellets sont séchés jusqu'à une humidité résiduelle de 6 à 10 % en poids.

10. Procédé selon la revendication 9, **caractérisé en ce que** le séchage des pellets est effectué à des températures ≤ 150 °C.

11. Procédé selon l'une quelconque des revendications 1 à 10, **caractérisé en ce qu'**un liant, de préférence à base d'amidon et/ou de cellulose, est ajouté à la substance devant être pressée.
